# EUROPÄISCHE PATENTSCHRIFT

(11) **EP 2 437 965 B1**
(45) Veröffentlichungstag und Bekanntmachung des Hinweises auf die Patenterteilung: **06.03.2013**
(21) Anmeldenummer: 10708204.2
(22) Anmeldetag: 12.03.2010
(51) Int. Cl.: B60W 50/00, G01D 18/00, G01C 9/00

(54) **VERFAHREN ZUR KALIBRIERUNG EINES NEIGUNGSSENSORS**
METHOD FOR CALIBRATING A SLOPE SENSOR
PROCÉDÉ D'ÉTALONNAGE D'UN CAPTEUR D'INCLINAISON

(30) Priorität: 03.06.2009 DE 102009026688
(43) Veröffentlichungstag der Anmeldung: 11.04.2012
(73) Patentinhaber: ZF Friedrichshafen AG, 88038 Friedrichshafen (DE)
(72) Erfinder: STAUDINGER, Joachim, 88214 Ravensburg (DE); WÜRTHNER, Maik, 88677 Markdorf (DE); SAUTER, Ingo, 88074 Meckenbeuren (DE)
(86) Internationale Anmeldenummer: PCT/EP2010/053161
(87) Internationale Veröffentlichungsnummer: WO 2010/139493

(56) Entgegenhaltungen:
- EP-A1- 0 451 446
- EP-A1- 1 930 690
- EP-A2- 0 716 000
- DE-C1- 4 308 128
- US-A- 5 446 658

## Beschreibung

Die Erfindung betrifft ein Verfahren zur Kalibrierung eines Neigungssensors, der zur Bestimmung der Fahrbahnneigung und des Steigungswiderstands in einem Kraftfahrzeug mit einem automatisierten Schaltgetriebe angeordnet ist und signaltechnisch mit dem Getriebesteuergerät des Schaltgetriebes in Verbindung steht.

Für die Steuerung von Übersetzungsänderungsvorgängen eines automatisierten Schaltgetriebes bildet der Fahrwiderstand F_Fw neben der Fahrgeschwindigkeit v_F des Kraftfahrzeugs, der Motordrehzahl des Antriebsmotors und der Leistungsanforderung des Fahrers einen wesentlichen Eingangsparameter. In Abhängigkeit von dem aktuellen Fahrwiderstand werden bei einem fahrenden Kraftfahrzeug jeweils die Schalt- und Zieldrehzahl der nächsten Schaltung, d.h. der betreffende Schaltzeitpunkt sowie der Zielgang der Schaltung, und bei stehendem Kraftfahrzeug der jeweilige Anfahrgang bestimmt.

Bei geschlossenem Antriebsstrang und nicht betätigter Betriebsbremse kann der Fahrwiderstand F_Fw bekanntlich aus der auf die Antriebsräder wirksamen Zug- oder Schubkraft des Antriebsmotors F_Rad und dem aus dem Produkt der Fahrzeugmasse m_Fzg mit der Fahrbeschleunigung a_F des Kraftfahrzeugs gebildeten Beschleunigungswiderstand F_B = m_Fzg * a_F nach der Formel F_Fw = F_Rad - F_B bestimmt werden. Die auf die Antriebsräder wirksame Zug- oder Schubkraft F_Rad kann z.B. aus dem Motormoment des Antriebsmotors, das aus dem Motorsteuergerät oder dem CAN-Datenbus ausgelesen werden kann, oder aus dem an der Ausgangswelle des Schaltgetriebes wirksamen Drehmoment, das mittels eines Drehmomentsensors erfasst werden kann, unter Berücksichtigung der jeweils wirksamen Übersetzung und des Übertragungswirkungsgrades im Antriebsstrang berechnet werden. Die Fahrbeschleunigung a_F kann durch die Differenzierung der Fahrgeschwindigkeit v_F des Kraftfahrzeugs ermittelt werden, die mittels Raddrehzahlsensoren erfasst oder aus dem CAN-Datenbus ausgelesen werden kann.

Bei zumindest teilweise geöffnetem Antriebsstrang, wie z.B. beim Rangieren mit schlupfender Anfahrkupplung, und/oder bei einer Betätigung der Betriebsbremse durch den Fahrer oder durch ein auf einen Aktuator der Betriebsbremse einwirkendes Steuergerät kann der Fahrwiderstand F_Fw mit hinreichender Genauigkeit jedoch nur durch die Summe seiner Komponenten (F_Fw = F_Luft + F_Roll + F_Steig), d.h. den Luftwiderstand F_Luft, den Rollwiderstand F_Roll und den Steigungswiderstand F_Steig bestimmt werden. Hierbei ergibt sich der Steigungswiderstand F_Steig aus dem Produkt der Fahrzeugmasse m_Fzg, der Erdbeschleunigung g und des Sinus der Fahrbahnneigung α_Fb gemäß der Gleichung F_Steig = m_Fzg * g * sin(α_Fb).

Neben der Schaltsteuerung eines automatisierten Schaltgetriebes können jedoch auch weitere Steuerungsfunktionen in Abhängigkeit von der Fahrbahnneigung durchgeführt werden. So ist beispielsweise in der DE 198 38 970 A1 ein Verfahren zum Anfahren am Berg für ein Kraftfahrzeug mit einer elektronischen Drehmomentsteuerung beschrieben, bei dem das Zurückrollen des Kraftfahrzeugs während eines Anfahrvorgangs dadurch verhindert wird, dass die von der Fahrpedalstellung abhängige Drehmomentanforderung um einen Offsetwert erhöht wird, der proportional zur Fahrbahnneigung und zur Fahrzeugmasse bestimmt wird.

In einem Verfahren zur Steuerung einer Rollsperre eines Kraftfahrzeugs mit einer fremdkraftgestützten elektronischen Bremssteuerung nach der DE 103 03 590 A1 ist vorgesehen, dass bei Fahrzeugstillstand ohne eine Betätigung des Bremspedals ein Rollsperrendruck in die Radbremsen eingesteuert wird, der proportional zur Fahrbahnneigung und einer weiteren aus der Fahrzeugmasse abgeleiteten Größe bestimmt wird.

Zur Ermittlung der Fahrbahnneigung ist üblicherweise ein die Fahrzeuglängsneigung erfassender Neigungssensor in dem Kraftfahrzeug angeordnet, der zumeist in das Getriebesteuergerät des Schaltgetriebes integriert ist. Ein derartiger Neigungssensor kann nach unterschiedlichen Wirkprinzipien ausgebildet sein. So ist aus der DE 36 34 244 A1 ein optoelektronischer Neigungssensor bekannt, bei dem eine lichtbrechende oder lichtreflektierende Flüssigkeit in einem Behälter im Strahlengang zwischen einem Strahlungssender und einem Strahlungsdetektor angeordnet ist. In der DE 40 25 184 C2 ist ein kapazitiver Neigungssensor beschrieben, bei dem eine elektrisch leitende Flüssigkeit in einem Behälter zwischen den mit einer Isolierschicht versehenen Elektroden eines Kondensators angeordnet ist. Aus der DE 197 52 439 C2 ist schließlich ein mikromechanischer Neigungssensor bekannt, bei dem eine Masseplatte über mindestens zwei Drucksensoreinheiten mit einer Trägerplatte in Verbindung steht, die auch die elektronische Auswerteeinheit zur Ermittlung der Neigung enthält.

Da der Neigungssensor bei einer in das Getriebesteuergerät integrierten Anordnung fest mit dem Schaltgetriebe verbunden ist, entspricht die Ausrichtung des Neigungssensors der Einbaulage des Schaltgetriebes, die nicht immer waagerecht ist, sondern durchaus um einige Grad zur Horizontalen geneigt sein kann. Ohne einen Nullpunktabgleich zeigt der Neigungssensor in diesem Fall eine Fahrbahnsteigung oder ein Fahrbahngefälle an, obwohl sich das betreffende Kraftfahrzeug in der Ebene befindet. Zudem unterliegt ein Neigungssensor Alterungseffekten, die ebenfalls zur Anzeige einer Fahrbahnsteigung oder eines Fahrbahngefälles führen können, obwohl sich das betreffende Kraftfahrzeug in einer Ebene befindet. Es besteht somit ein Bedarf, bei der Erstinbetriebnahme, d.h. nach der Produktion des Kraftfahrzeugs, und bei einer Wiederinbetriebnahme des Kraftfahrzeugs, z.B. nach einer Reparatur oder einem Austausch des Schaltgetriebes in einer Werkstatt, sowie während des Fahrbetriebs des Kraftfahrzeugs und des Schaltgetriebes eine Kalibrierung des Neigungssensors durchzuführen, indem jeweils ein aktueller Offsetwert x_Offset zum Nullpunktabgleich des Neigungssensors ermittelt wird, mit dem das Sensorsignal x_Nsn des Neigungssensors nachfolgend in Bezug auf die waagerechte Fahrzeuglage korrigiert werden kann (α_Fb = f (x_Nsn - x_Offset)).

Eine derartige Kalibrierung kann prinzipiell von einem Fahrer manuell ausgelöst werden, indem dieser beim Befahren einer ebenen, d.h. waagerechten Fahrbahn ein Bedienelement, wie eine bestimmte Funktionstaste oder den Wählhebel, in vorgeschriebener Weise betätigt. Während dies bei der Erstinbetriebnahme oder der Wiederinbetriebnahme des Kraftfahrzeugs beim Befahren einer ebenen Teststrecke durch geschultes Fachpersonal noch problemlos möglich sein sollte, besteht bei einer manuellen Auslösung der Kalibrierfunktion durch einen Fahrer während des normalen Fahrbetriebs die Gefahr, dass eine leicht ansteigende oder abfallende Fahrbahn von dem Fahrer irrtümlich als waagerecht angesehen wird, dass der Fahrer durch die Auslösung und Überwachung der Kalibrierfunktion sicherheitsrelevant von der Beobachtung des Verkehrsgeschehens abgelenkt wird, und dass eine rechtzeitige Auslösung der Kalibrierfunktion von dem Fahrer vergessen und somit unterlassen wird.

Es wird weiter auf EP-A-1930690 und EP-A-0451446 verweisen.

Vor diesem Hintergrund liegt der Erfindung die Aufgabe zugrunde, ein Verfahren zur selbsttätigen Kalibrierung eines Neigungssensors der eingangs genannten Art vorzuschlagen.

Diese Aufgabe wird in Verbindung mit den Merkmalen des Oberbegriffs des Anspruchs dadurch gelöst, dass unter bestimmten Betriebsbedingungen ein aktueller Offsetwert x_Offset zum Nullpunktabgleich des Neigungssensors selbsttätig ermittelt wird, wobei nach der Inbetriebnahme des Kraftfahrzeugs während der Fahrt in eine erste Fahrtrichtung der aktuelle Fahrwiderstand F_Fw1 wiederholt neigungssensorunabhängig ermittelt und temporär abgespeichert sowie ein aktueller Rohsignalwert x_Ns0 des Neigungssensors erfasst wird, bis ein Fahrtrichtungswechsel erkannt wird, dass dann zunächst der zuletzt erfasste Rohsignalwert x_Ns0 des Neigungssensors temporär abgespeichert wird, und danach während der Fahrt in die entgegengesetzte zweite Fahrtrichtung der aktuelle Fahrwiderstand F_Fw2 wiederholt neigungssensorunabhängig ermittelt und temporär abgespeichert wird, und dass der für die erste Fahrtrichtung ermittelte Fahrwiderstand F_Fw1 mit dem für die entgegengesetzte zweite Fahrtrichtung ermittelten Fahrwiderstand F_Fw2 verglichen wird, und bei einer innerhalb einer vorgegebenen Toleranzschwelle ΔF_Ts liegenden Übereinstimmung der beiden Fahrwiderstände F_Fw1, F_Fw2 (| F_Fw1 - F_Fw2 | ≤ ΔF_Ts) der abgespeicherte Rohsignalwert x_Ns0 des Neigungssensors als Offsetwert x_Offset zum Nullpunktabgleich des Neigungssensors dauerhaft abgespeichert wird (x_Offset = x_Ns0).

Vorteilhafte Ausgestaltungen und Weiterbildungen des erfindungsgemäßen Verfahrens sind Gegenstand der Ansprüche 2 bis 20.

Das erfindungsgemäße Verfahren geht demnach aus von einem Kraftfahrzeug, beispielsweise einem Nutzfahrzeug, das mit einem automatisierten Schaltgetriebe versehen ist, dessen Getriebesteuergerät mit einem Neigungssensor zur Erfassung der Fahrzeuglängsneigung und somit zur Bestimmung der Fahrbahnneigung α_Fb und des Steigungswiderstands F_Steig ausgerüstet ist oder zumindest signaltechnisch mit einem derartigen Neigungssensor in Verbindung steht.

Der Erfindung liegt die Erkenntnis zugrunde, dass sich das Kraftfahrzeug auf einer ebenen, d.h. waagerechten Fahrbahn befindet, wenn ein vor einem Fahrtrichtungswechsel ermittelter Fahrwiderstand F_Fw1 und ein nach dem Fahrtrichtungswechsel ermittelter Fahrwiderstand F_Fw2 weitgehend übereinstimmen. Demnach handelt es sich bei dem unmittelbar vor dem Fahrtrichtungswechsel erfassten Rohsignal x_Ns0 des Neigungssensors dann um den Nullpunktoffset x_Offset (x_Offset = x_Ns0) für das Signal des Neigungssensors, der nachfolgend zum Nullpunktabgleich des Neigungssensors, d.h. zur Offsetkorrektur des Sensorsignals x_Nsn des Neigungssensors, verwendet werden kann (α_Fb = f (x_Nsn - x_Offset)).

Die neigungssensorunabhängige Ermittlung des Fahrwiderstands F_Fw1, F_Fw2 erfolgt bevorzugt derart, dass dieser jeweils bestimmt wird aus der auf die Antriebsräder wirksamen Zug- oder Schubkraft F_Rad des Antriebsmotors und dem aus der Fahrzeugmasse m_Fzg und der Fahrbeschleunigung a_F bestimmten Beschleunigungswiderstand F_B, nach der Gleichung F_Fw = F_Rad - F_B beziehungsweise F_Fw = F_Rad - m_Fzg * a_F.

Zur Vermeidung der Ermittlung eines fehlerhaften oder ungenauen Offsetwertes x_Offset des Neigungssensors ist vorgesehen, dass der ermittelte Fahrwiderstand F_Fw1, F_Fw2 jeweils einer Plausibilitätskontrolle unterzogen wird, und dass nur ein plausibler Fahrwiderstandswert F_Fw1, F_Fw2 abgespeichert und für die Ermittlung des Offsetwertes x_Offset des Neigungssensors verwendet wird.

Im Rahmen der Plausibilitätskontrolle kann z.B. geprüft werden, ob der ermittelte Fahrwiderstand F_Fw1, F_Fw2 jeweils in einem durch applizierbare Grenzwerte F_Fw_min, F_Fw_max bestimmten Erwartungsbereich liegt (F_Fw_min ≤ F_Fw ≤ F_Fw_max).

Um auszuschließen, dass sich das Kraftfahrzeug gerade in einer Mulde oder auf einer Kuppe befindet, bei dem die beiden Fahrwiderstände F_Fw1 und F_Fw2 in beiden Fahrtrichtungen zwar gleich groß, aber mit einem positiven oder negativen Steigungsanteil versehen sind, kann im Rahmen der Plausibilitätskontrolle zusätzlich auch der Gradient des Fahrwiderstands d/dt F_Fw1, d/dt F_Fw2 bestimmt und überprüft werden, ob der jeweilige Fahrwiderstandsgradient d/dt F_Fw1, d/dt F_Fw2 während einer applizierbaren Beobachtungszeit innerhalb einer applizierbaren Toleranzschwelle nahe Null liegt.

Alternativ dazu kann im Rahmen der Plausibilitätskontrolle auch geprüft werden, ob die Differenz des aktuell ermittelten Fahrwiderstandswertes F_Fw1, F_Fw2 und des in derselben Fahrtrichtung zuletzt ermittelten Fahrwiderstandswertes F_Fw1, F_Fw2 jeweils innerhalb einer applizierbaren Toleranzschwelle nahe Null liegt.

Hinsichtlich der zu vergleichenden Fahrwiderstandswerte F_Fw1, F_Fw2 kann vorgesehen sein, dass der in der ersten Fahrtrichtung zuletzt ermittelte Fahrwiderstandswert F_Fw1 mit dem in der zweiten Fahrtrichtung zuerst ermittelten Fahrwiderstandswert F_Fw2 verglichen wird.

Zur Erhöhung der Genauigkeit der für die beiden Fahrtrichtungen ermittelten Fahrwiderstände F_Fw1, F_Fw2 kann jedoch auch vorgesehen sein, dass der für den Vergleich verwendete Fahrwiderstand F_Fw1, F_Fw2 in jeder Fahrtrichtung jeweils als Mittelwert einer applizierbaren Anzahl mehrerer aufeinanderfolgend ermittelter Fahrwiderstandswerte F_Fw1, F_Fw2 bestimmt wird.

Um hierbei den Einfluss von Störsignalen, die z.B. auf Fahrbahnunebenheiten zurück zu führen sein können, zu vermeiden, werden die in jeder Fahrtrichtung aufeinanderfolgend ermittelten Fahrwiderstandswerte F_Fw1, F_Fw2 zweckmäßig jeweils mittels einer geeigneten Filterfunktion geglättet.

Zur weiteren Erhöhung der Genauigkeit kann der dauerhaft abgespeicherte Offsetwert x_Offset des Neigungssensors auch als Mittelwert einer applizierbaren Anzahl mehrerer bei aufeinanderfolgenden Fahrtrichtungswechseln ermittelter Offsetwerte x_Offset bestimmt werden.

Da die Ermittlung des Fahrwiderstands F_Fw1, F_Fw2 nach der Gleichung F_Fw = F_Rad - F_B nur bei geschlossenem Antriebsstrang und bei Nichtauftreten zusätzlicher Fahrwiderstandskräfte möglich ist, sind nachfolgend Überwachungsfunktionen angegeben, die bedarfsweise zu einer Unterbrechung oder zu einem Abbruch der Ermittlung des Fahrwiderstands F_Fw1, F_Fw2 führen.

Da eine Kurvenfahrt, z.B. aufgrund radierender Radreifen einen erhöhten Rollwiderstand F_Roll bewirkt, wird zweckmäßig der Lenkwinkel der Fahrzeuglenkung und/oder die Querbeschleunigung des Kraftfahrzeugs erfasst, und die Ermittlung des Fahrwiderstands F_Fw1, F_Fw2 sowie eines aktuellen Offsetwertes x_Offset des Neigungssensors für die Dauer Δt_U einer erkannten Kurvenfahrt unterbrochen.

Ebenso ist eine Geländefahrt aufgrund von Fahrbahnunebenheiten und losem Untergrund mit einem erhöhten Rollwiderstand F_Roll verbunden. Daher ist vorzugsweise vorgesehen, dass Fahrbahnunebenheiten und/oder die Querneigung des Kraftfahrzeugs und/oder ein in dem Schaltgetriebe eingelegter Geländegang erfasst werden, und dass die Ermittlung des Fahrwiderstands F_Fw1, F_Fw2 und eines aktuellen Offsetwertes x_Offset des Neigungssensors für die Dauer Δt_U einer erkannten Geländefahrt unterbrochen wird.

Zur Berücksichtigung eines geöffneten Antriebsstrangs kann der Schaltzustand des Schaltgetriebes erfasst werden, und die Ermittlung des Fahrwiderstands F_Fw1, F_Fw2 sowie eines aktuellen Offsetwertes x_Offset des Neigungssensors für die Dauer Δt_U eines erkannten Gangwechsels unterbrochen werden.

Hierzu kann auch vorgesehen sein, dass der Öffnungsgrad einer den Antriebsmotor mit dem Schaltgetriebe verbindenden Anfahrkupplung erfasst wird, und dass die Ermittlung des Fahrwiderstands F_Fw1, F_Fw2 sowie eines aktuellen Offsetwertes x_Offset des Neigungssensors für die Dauer Δt_U einer zumindest teilweise geöffneten Anfahrkupplung unterbrochen wird.

Zur Berücksichtigung einer zusätzlichen Bremskraft ist vorgesehen, dass der Betätigungszustand der Betriebsbremse erfasst wird, und dass die Ermittlung des Fahrwiderstands F_Fw1, F_Fw2 sowie eines aktuellen Offsetwertes x_Offset des Neigungssensors für die Dauer Δt_U einer erkannten Betätigung der Betriebsbremse unterbrochen wird.

Da ein für das erfindungsgemäße Verfahren erforderlicher Fahrtrichtungswechsel naturgemäß nur bei niedriger Fahrgeschwindigkeit v_F stattfinden bzw. bevorstehen kann, und bei höherer Fahrgeschwindigkeit der Luftwiderstand F_Luft als zusätzliche Widerstandskraft berücksichtigt werden müsste, kann zusätzlich vorgesehen sein, dass die aktuelle Fahrgeschwindigkeit v_F erfasst wird, und dass die Ermittlung des Fahrwiderstands F_Fw1, F_Fw2 sowie eines aktuellen Offsetwertes x_Offset des Neigungssensors für die Dauer Δt_U einer oberhalb einer applizierbaren Grenzgeschwindigkeit v_Gr liegenden Fahrgeschwindigkeit v_F unterbrochen wird (v_F > v_Gr).

Alternativ oder ergänzend hierzu kann auch der aktuell eingelegte Fahrgang G_F erfasst werden, und die Ermittlung des Fahrwiderstands F_Fw1, F_Fw2 sowie eines aktuellen Offsetwertes x_Offset des Neigungssensors für die Dauer Δt_U eines oberhalb eines applizierbaren Grenzgangs G_Gr liegenden Fahrgangs G_F unterbrochen werden (G_F > G_Gr).

Zur Berücksichtigung einer Betriebspause kann vorgesehen sein, dass der Betriebszustand des Kraftfahrzeugs erfasst wird, und dass die Ermittlung des Fahrwiderstands F_Fw1, F_Fw2 sowie eines aktuellen Offsetwertes x_Offset des Neigungssensors für die Dauer Δt_U einer erkannten Betriebspause unterbrochen wird.

Auf die Länge der Unterbrechungsdauer Δt_U kann derart reagiert werden, dass die Ermittlung des Fahrwiderstands F_Fw1, F_Fw2 und eines aktuellen Offsetwertes x_Offset des Neigungssensors nach Ablauf der Unterbrechung fortgesetzt wird, wenn die Unterbrechungsdauer Δt_U eine applizierbare Grenzdauer Δt_Gr unterschritten hat (Δt_U < Δt_Gr), und abgebrochen wird, wenn die Unterbrechungsdauer Δt_U die Grenzdauer Δt_Gr erreicht oder überschritten hat (Δt_U ≥ Δt_Gr). Hierbei kann die jeweilige Grenzdauer Δt_Gr wahlweise einheitlich oder abhängig von dem jeweiligen Grund der Unterbrechung unterschiedlich lang definiert sein.

Zur Berücksichtigung von Be- und Entladungsvorgängen, die mit einer Änderung der Fahrzeugmasse M_Fzg und demzufolge mit einer Änderung des Rollwiderstands F_Roll sowie des Beschleunigungswiderstands F_B verbunden sind, ist zudem vorgesehen, dass die Fahrzeugmasse m_Fzg oder die Ladungsmasse m_Ldg erfasst wird, und dass die Ermittlung des Fahrwiderstands F_Fw1, F_Fw2 und eines aktuellen Offsetwertes x_Offset des Neigungssensors abgebrochen wird, wenn die ermittelte Änderung Δm der Fahrzeugmasse m_Fzg oder der Ladungsmasse m_Ldg im Betrag über einer applizierbaren Grenzmassendifferenz Δm_Gr > 0 liegt (| Δm | > Δm_Gr).

Zur Verdeutlichung der Erfindung ist der Beschreibung eine Zeichnung mit einem Ausführungsbeispiel beigefügt. In dieser zeigt
- Fig. 1: einen Ablaufplan des erfindungsgemäßen Verfahrens zur Ermittlung eines Offsetwertes zum Nullpunktabgleich eines Neigungssensors, und
- Fig. 2: eine Skizze zur Erläuterung der Betriebssituation eines Kraftfahrzeugs zur Durchführung des erfindungsgemäßen Verfahrens.

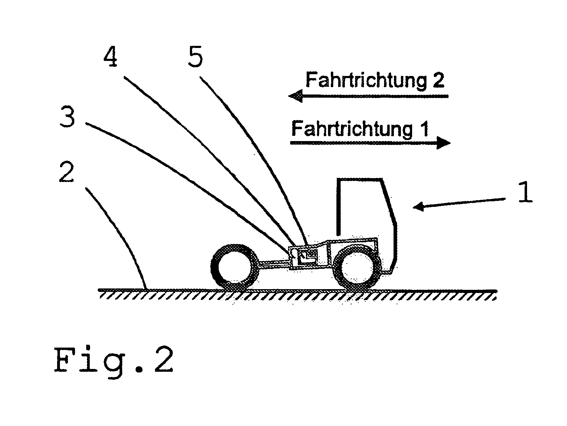

Ein in Fig. 2 schematisch dargestelltes, vorliegend als Lastkraftwagen ausgeführtes Kraftfahrzeug 1 befindet sich auf einer ebenen, d.h. waagerechten Fahrbahn 2. Der Antriebsstrang des Kraftfahrzeugs 1 beinhaltet ein automatisiertes Schaltgetriebe 3 mit einem Getriebesteuergerät 4, in oder an dem ein Neigungssensor 5 zur Bestimmung der Fahrbahnneigung α_Fb und des Steigungswiderstands F_Steig angeordnet ist.

In dem nachfolgend beschriebenen Verfahren wird ein Fahrtrichtungswechsel, d.h. ein Wechsel von einer Fahrt in eine erste Fahrtrichtung, z.B. einer Vorwärtsfahrt, in eine Fahrt in eine zweite Fahrtrichtung, z.B. eine Rückwärtsfahrt, dazu genutzt, um eine ebene bzw. waagerechte Fahrbahn 2 zu erkennen, und in diesem Fall den erfassten Rohsignalwert x_Ns0 des Neigungssensors 5 als aktuellen Offsetwert x_Offset zum Nullpunktabgleich des Neigungssensors 5 abzuspeichern.

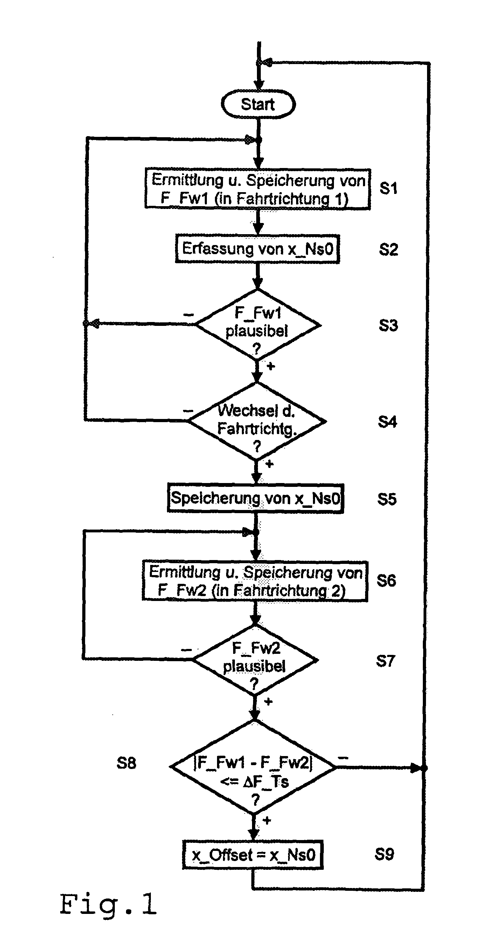

Das in dem Ablaufplan von Fig. 1 vereinfacht dargestellte Verfahren startet mit der Inbetriebnahme des Kraftfahrzeugs 1 und der Fahrt in eine erste Fahrtrichtung, z.B. einer Vorwärtsfahrt. Im Verfahrensschritt S1 wird der Fahrwiderstand F_Fw1 in diese erste Fahrtrichtung neigungssensorunabhängig ermittelt und temporär, d.h. in einem flüchtigen Speicher, abgespeichert. Hierzu wird das momentan an den Antriebsrädern des Kraftfahrzeugs 1 wirksame Zug- oder Schubmoment des Antriebsmotors F_Rad, die aktuelle Fahrzeugmasse m_Fzg sowie die aktuelle Fahrbeschleunigung a_F erfasst, und der Fahrwiderstand nach der Gleichung F_Fw1 = F_Rad - m_Fzg * a_F berechnet.

Etwa zeitgleich wird im Verfahrensschritt S2 der aktuelle Rohsignalwert x_Ns0 des Neigungssensors 5 erfasst.

Anschließend wird in Verfahrensschritt S3 eine Plausibilitätskontrolle des ermittelten Fahrwiderstands F_Fw1 durchgeführt, also beispielsweise geprüft, ob der ermittelte Fahrwiderstand F_Fw1 in einem durch applizierbare Grenzwerte F_Fw_min, F_Fw_max bestimmten Erwartungsbereich liegt (F_Fw_min ≤ F_Fw1 ≤ F_Fw_max). Falls der Fahrwiderstandswert F_Fw1 nicht plausibel ist, wird dieser Wert nicht weiter verwendet, d.h. gelöscht, und es wird vor Verfahrensschritt S1 zurück verzweigt sowie nachfolgend ein neuer Fahrwiderstandswert F_Fw1 ermittelt.

Falls der Fahrwiderstandswert F_Fw1 plausibel ist, wird im Verfahrensschritt S4 geprüft, ob ein Fahrtrichtungswechsel vorliegt. Hierzu kann z.B. ein Wechsel der Wählhebelposition von D auf R (oder umgekehrt) oder ein Wechsel des in dem Schaltgetriebe 3 eingelegten Gangs von einem Vorwärtsgang in einen Rückwärtsgang (oder umgekehrt) erfasst werden. Falls kein Fahrtrichtungswechsel vorliegt, wird vor den Verfahrensschritt S1 zurück verzweigt und nachfolgend ein neuer Fahrwiderstandswert F_Fw1 ermittelt.

Falls jedoch ein Fahrtrichtungswechsel erkannt wurde, so wird der zuvor erfasste Rohsignalwert x_Ns0 des Neigungssensors 5 gemäß einem Verfahrensschritt S5 temporär in einem flüchtigen Speicher abgespeichert.

Danach wird im Verfahrensschritt S6 der Fahrwiderstand F_Fw2 in die entgegengesetzte zweite Fahrtrichtung neigungssensorunabhängig ermittelt und temporär in einem flüchtigen Speicher abgespeichert. Hierzu wird wieder das momentan an den Antriebsrädern des Kraftfahrzeugs 1 wirksame Zug- oder Schubmoment des Antriebsmotors F_Rad, die aktuelle Fahrzeugmasse m_Fzg sowie die aktuelle Fahrbeschleunigung a_F erfasst, und der Fahrwiderstand nach der Gleichung F_Fw2 = F_Rad - m_Fzg * a_F berechnet.

Danach wird im Verfahrensschritt S7 eine Plausibilitätskontrolle des ermittelten Fahrwiderstands F_Fw2 durchgeführt. Falls dieser Fahrwiderstandswert F_Fw2 nicht plausibel ist, wird dieser Wert nicht weiter verwendet, d.h. gelöscht, und es wird vor den Verfahrensschritt S6 zurück verzweigt und nachfolgend ein neuer Fahrwiderstandswert F_Fw2 ermittelt:

Falls der Fahrwiderstandswert F_Fw2 plausibel ist, wird in Verfahrensschritt S8 geprüft, ob die Differenz der beiden Fahrwiderstände F_Fw1, F_Fw2 innerhalb eines vorgegebenen Toleranzbereiches ΔF_Ts übereinstimmen
(| F_Fw1 - F_Fw2| ≤ ΔF_Ts), was bedeutet, dass sich das Kraftfahrzeug 1 auf einer ebenen, d.h. waagerechten Fahrbahn 2 befindet. Falls die beiden Fahrwiderstände F_Fw1, F_Fw2 nicht übereinstimmen, d.h. sich das Kraftfahrzeug 1 nicht auf einer ebenen Fahrbahn 2 befindet, wird der aktuelle Verfahrenszyklus abgebrochen und ein neuer Verfahrenszyklus gestartet.

Sofern die beiden Fahrwiderstände F_Fw1, F-Fw2 übereinstimmen, d.h. sich das Kraftfahrzeug 1 auf einer ebenen Fahrbahn 2 befindet, wird der zuletzt erfasste Rohsignalwert x_Ns0 des Neigungssensors 5 als aktueller Offsetwert x_Offset des Neigungssensors 5 (x_Offset = x_Ns0) dauerhaft in einem nichtflüchtigen Speicher abgespeichert und nachfolgend zum Nullpunktabgleich des Neigungssensors 5 verwendet. Danach wird ein neuer Verfahrenszyklus zur Ermittlung eines neuen Offsetwertes x_Offset des Neigungssensors 5 gestartet.

### Bezugszeichen

- 1: Kraftfahrzeug
- 2: Fahrbahn
- 3: Automatisiertes Schaltgetriebe
- 4: Getriebesteuergerät
- 5: Neigungssensor
- a_F: Fahrbeschleunigung
- F_B: Beschleunigungswiderstand
- F_Fw: Fahrwiderstand
- F_Fw_max: Maximaler Fahrwiderstand
- F_Fw_min: Minimaler Fahrwiderstand
- F_Fw1: Fahrwiderstand in erster Fahrtrichtung
- F_Fw2: Fahrwiderstand in zweiter Fahrtrichtung
- F_Luft: Luftwiderstand
- F_Rad: Zugkraft, Schubkraft
- F_Roll: Rollwiderstand
- F_Steig: Steigungswiderstand
- g: Erdbeschleunigung
- G_F: Fahrgang
- G_Gr: Grenzgang
- m_Fzg: Fahrzeugmasse
- m_Ldg: Ladungsmasse
- S1 - S9: Verfahrensschritte
- v_F: Fahrgeschwindigkeit
- v_Gr: Grenzgeschwindigkeit
- x_Ns0: Rohsignalwert
- x_Nsn: Sensorsignal
- x_Offset: Offsetwert
- α_Fb: Fahrbahnneigung
- Δm: Änderung der Masse
- Δm_Gr: Grenzmassendifferenz
- Δt_Gr: Grenzdauer
- Δt_U: Unterbrechungsdauer

## Patentansprüche

1. Verfahren zur Kalibrierung eines Neigungssensors, der zur Bestimmung der Fahrbahnneigung (α_Fb) und des Steigungswiderstands (F_Steig) in einem Kraftfahrzeug (1) mit einem automatisierten Schaltgetriebe (3) angeordnet ist und signaltechnisch mit dem Getriebesteuergerät (4) des Schaltgetriebes (3) in Verbindung steht, **dadurch gekennzeichnet, dass** unter bestimmten Betriebsbedingungen ein aktueller Offsetwert (x_Offset) zum Nullpunktabgleich des Neigungssensors (5) selbsttätig ermittelt wird, wobei nach der Inbetriebnahme des Kraftfahrzeugs (1) während der Fahrt in eine erste Fahrtrichtung der aktuelle Fahrwiderstand (F_Fw1) wiederholt neigungssensorunabhängig ermittelt und temporär abgespeichert sowie ein aktueller Rohsignalwert (x_Ns0) des Neigungssensors (5) erfasst wird, bis ein Fahrtrichtungswechsel erkannt wird, dass dann zunächst der zuletzt erfasste Rohsignalwert (x_Ns0) des Neigungssensors (5) temporär abgespeichert wird, und danach während der Fahrt in die entgegengesetzte zweite Fahrtrichtung der aktuelle Fahrwiderstand (F_Fw2) wiederholt neigungssensorunabhängig ermittelt und temporär abgespeichert wird, und dass der für die erste Fahrtrichtung ermittelte Fahrwiderstand (F_Fw1) mit dem für die entgegengesetzte zweite Fahrtrichtung ermittelten Fahrwiderstand (F_Fw2) verglichen wird, und bei einer innerhalb einer vorgegebenen Toleranzschwelle (ΔF_Ts) liegenden Übereinstimmung der beiden Fahrwiderstände (F_Fw1, F_Fw2) der abgespeicherte Rohsignalwert (x_Ns0) des Neigungssensors als Offsetwert (x_Offset) zum Nullpunktabgleich des Neigungssensors (5) dauerhaft abgespeichert wird (x_Offset = x_Ns0).

2. Verfahren nach Anspruch 1, **dadurch gekennzeichnet, dass** der Fahrwiderstand (F_Fw1, F_Fw2) jeweils aus der auf die Antriebsräder wirksamen Zug- oder Schubkraft (F_Rad) des Antriebsmotors sowie dem aus der Fahrzeugmasse (m_Fzg) und der Fahrbeschleunigung (a_F) bestimmten Beschleunigungswiderstand F_B (F_B = m_Fzg * a_F) nach der Gleichung F_Fw = F_Rad - F_B bestimmt wird.

3. Verfahren nach Anspruch 1 oder 2, **dadurch gekennzeichnet, dass** der ermittelte Fahrwiderstand (F_Fw1, F_Fw2) jeweils einer Plausibilitätskontrolle unterzogen wird, und dass nur ein plausibler Fahrwiderstandswert (F_Fw1, F_Fw2) abgespeichert und für die Ermittlung des Offsetwertes (x_Offset) des Neigungssensors (5) verwendet wird.

4. Verfahren nach Anspruch 3, **dadurch gekennzeichnet, dass** im Rahmen der Plausibilitätskontrolle überprüft wird, ob der ermittelte Fahrwiderstand (F_Fw1, F_Fw2) jeweils in einem durch applizierbare Grenzwerte (F_Fw_min, F_Fw_max) bestimmten Erwartungsbereich liegt.

5. Verfahren nach Anspruch 3 oder 4, **dadurch gekennzeichnet, dass** im Rahmen der Plausibilitätskontrolle der Gradient des Fahrwiderstands (d/dt F_Fw1, d/dt F_Fw2) bestimmt und geprüft wird, ob der jeweilige Fahrwiderstandsgradient (d/dt F_Fw1, d/dt F_Fw2) während einer applizierbaren Beobachtungszeit innerhalb einer applizierbaren Toleranzschwelle nahe Null liegt.

6. Verfahren nach Anspruch 3 oder 4, **dadurch gekennzeichnet, dass** im Rahmen der Plausibilitätskontrolle geprüft wird, ob die Differenz des aktuell ermittelten Fahrwiderstandswertes (F_Fw1, F_Fw2) und des in derselben Fahrtrichtung zuletzt ermittelten Fahrwiderstandswertes (F_Fw1, F_Fw2) jeweils innerhalb einer applizierbaren Toleranzschwelle nahe Null liegt.

7. Verfahren nach einem der Ansprüche 1 bis 6, **dadurch gekennzeichnet, dass** der in der ersten Fahrtrichtung zuletzt ermittelte Fahrwiderstandswert (F_Fw1) mit dem in der zweiten Fahrtrichtung zuerst ermittelten Fahrwiderstandswert (F_Fw2) verglichen wird.

8. Verfahren nach einem der Ansprüche 1 bis 6, **dadurch gekennzeichnet, dass** der verwendete Fahrwiderstand (F_Fw1, F_Fw2) in jeder Fahrtrichtung jeweils als Mittelwert einer applizierbaren Anzahl mehrerer aufeinanderfolgend ermittelter Fahrwiderstandswerte (F_Fw1, F_Fw2) bestimmt wird.

9. Verfahren nach Anspruch 7 oder 8, **dadurch gekennzeichnet, dass** die in jeder Fahrtrichtung aufeinanderfolgend ermittelten Fahrwiderstandswerte (F_Fw1, F_Fw2) jeweils mittels einer geeigneten Filterfunktion geglättet werden.

10. Verfahren nach einem der Ansprüche 1 bis 9, **dadurch gekennzeichnet, dass** der dauerhaft abgespeicherte Offsetwert (x_Offset) des Neigungssensors als Mittelwert einer applizierbaren Anzahl mehrerer bei aufeinanderfolgenden Fahrtrichtungswechseln ermittelter Offsetwerte (x_Offset) bestimmt wird.

11. Verfahren nach einem der Ansprüche 1 bis 10, **dadurch gekennzeichnet, dass** der Lenkwinkel der Fahrzeuglenkung und/oder die Querbeschleunigung des Kraftfahrzeugs erfasst wird, und dass die Ermittlung des Fahrwiderstands (F_Fw1, F_Fw2) sowie eines aktuellen Offsetwertes (x_Offset) des Neigungssensors (5) für die Dauer (Δt_U) einer erkannten Kurvenfahrt unterbrochen wird.

12. Verfahren nach einem der Ansprüche 1 bis 11, **dadurch gekennzeichnet, dass** Fahrbahnunebenheiten und/oder die Querneigung des Kraftfahrzeugs und / oder ein in dem Schaltgetriebe eingelegter Geländegang erfasst werden, und dass die Ermittlung des Fahrwiderstands (F_Fw1, F_Fw2) sowie eines aktuellen Offsetwertes (x_Offset) des Neigungssensors (5) für die Dauer (Δt_U) einer erkannten Geländefahrt unterbrochen wird.

13. Verfahren nach einem der Ansprüche 1 bis 12 **dadurch gekennzeichnet, dass** der Schaltzustand des Schaltgetriebes (3) erfasst wird, und dass die Ermittlung des Fahrwiderstands (F_Fw1, F_Fw2) sowie eines aktuellen Offsetwertes (x_Offset) des Neigungssensors (5) für die Dauer (Δt_U) eines erkannten Gangwechsels unterbrochen wird.

14. Verfahren nach einem der Ansprüche 1 bis 13, **dadurch gekennzeichnet, dass** der Öffnungsgrad einer den Antriebsmotor mit dem Schaltgetriebe (3) verbindenden Anfahrkupplung erfasst wird, und dass die Ermittlung des Fahrwiderstands (F_Fw1, F_Fw2) sowie eines aktuellen Offsetwertes (x_Offset) des Neigungssensors (5) für die Dauer (Δt_U) einer zumindest teilweise geöffneten Anfahrkupplung unterbrochen wird.

15. Verfahren nach einem der Ansprüche 1 bis 14, **dadurch gekennzeichnet, dass** der Betätigungszustand_{'}der Betriebsbremse erfasst wird, und dass die Ermittlung des Fahrwiderstands (F_Fw1, F_Fw2) sowie eines aktuellen Offsetwertes (x_Offset) des Neigungssensors (5) für die Dauer (Δt_U) einer erkannten Betätigung der Betriebsbremse unterbrochen wird.

16. Verfahren nach einem der Ansprüche 1 bis 15, **dadurch gekennzeichnet, dass** die aktuelle Fahrgeschwindigkeit (v_F) erfasst wird, und dass die Ermittlung des Fahrwiderstands (F_Fw1, F_Fw2) sowie eines aktuellen Offsetwertes (x_Offset) des Neigungssensors (5) für die Dauer Δt_U einer oberhalb einer applizierbaren Grenzgeschwindigkeit (v_Gr) liegenden Fahrgeschwindigkeit (v_F) unterbrochen wird (v_F > v_Gr).

17. Verfahren nach einem der Ansprüche 1 bis 16, **dadurch gekennzeichnet, dass** der aktuell eingelegte Fahrgang (G_F) erfasst wird, und dass die Ermittlung des Fahrwiderstands (F_Fw1, F_Fw2) sowie eines aktuellen Offsetwertes (x_Offset) des Neigungssensors (5) für die Dauer Δt_U eines oberhalb eines applizierbaren Grenzgangs (G_Gr) liegenden Fahrgangs (G_F) unterbrochen wird (G_F > G_Gr).

18. Verfahren nach einem der Ansprüche 1 bis 17, **dadurch gekennzeichnet, dass** der Betriebszustand des Kraftfahrzeugs erfasst wird, und dass die Ermittlung des Fahrwiderstands (F_Fw1, F_Fw2) sowie eines aktuellen Offsetwertes (x_Offset) des Neigungssensors (5) für die Dauer (Δt_U) einer erkannten Betriebspause unterbrochen wird.

19. Verfahren nach einem der Ansprüche 11 bis 18, **dadurch gekennzeichnet, dass** die Ermittlung des Fahrwiderstands (F_Fw1, F_Fw2) und eines aktuellen Offsetwertes (x_Offset) des Neigungssensors (5) nach Ablauf der Unterbrechung fortgesetzt wird, wenn die Unterbrechungsdauer (Δt_U) eine applizierbare Grenzdauer (Δt_Gr) unterschritten hat (Δt_U < Δt_Gr), und abgebrochen wird, wenn die Unterbrechungsdauer (Δt_U) die Grenzdauer (Δt_Gr) erreicht oder überschritten hat (Δt_U Δt_Gr).

20. Verfahren nach einem der Ansprüche 1 bis 19, **dadurch gekennzeichnet, dass** die Fahrzeugmasse (m_Fzg) oder die Ladungsmasse (m_Ldg) erfasst wird, und dass die Ermittlung des Fahrwiderstands (F_Fw1, F_Fw2) und eines aktuellen Offsetwertes (x_Offset) des Neigungssensors (5) abgebrochen wird, wenn die ermittelte Änderung (Δm) der Fahrzeugmasse (m_Fzg) oder der Ladungsmasse (m_Ldg) im Betrag über einer applizierbaren Grenzmassendifferenz (Δm_Gr > 0) liegt (| Δm |> Δm_Gr).

## Claims

1. Method for the calibration of an inclination sensor, which is disposed in a motor vehicle (1) with an automated gearbox (3) for determining the inclination of the carriageway (a_Fb) and the gradient resistance (F_Steig) and has a signalling connection to the gearbox controller (4) of the gearbox (3), **characterized in that** under certain operating conditions an actual offset value (x_Offset) for zero point compensation of the inclination sensor (5) is determined automatically, wherein following start-up of the motor vehicle (1) the actual running resistance (F_Fw1) is repeatedly determined independently of the inclination sensor while travelling in a first direction of travel and temporarily stored and an actual raw signal value (x_Ns0) of the inclination sensor (5) is detected until a change of the direction of travel is detected, and **in that** then only the latest detected raw signal value (x_Ns0) of the inclination sensor (5) is temporarily stored, and the actual running resistance (F_Fw2) is repeatedly determined independently of the inclination sensor while travelling in the opposite second direction of travel and temporarily stored, and **in that** the running resistance (F_Fw1) determined for the first direction of travel is compared with the running resistance (F_Fw2) determined for the opposite second direction of travel, and in the event of agreement of the two running resistances (F_Fw1, F_Fw2) to within a predetermined tolerance threshold (ΔF_Ts), the stored raw signal value (x_Ns0) of the inclination sensor is permanently stored as an offset value (x_Offset) for the zero point compensation of the inclination sensor (5), i.e. (x_Offset = x_Ns0).

2. Method according to Claim 1, **characterized in that** the running resistance (F_Fw1, F_Fw2) is determined in each case from the traction or thrust force acting on the drive wheels (F_Rad) of the drive engine and the acceleration resistance F_B (F_B = m_Fzg*a_F) determined from the mass of the vehicle (m_Fzg) and the acceleration of travel (a_F) according to the equation F_Fw = F_Rad - F_B.

3. Method according to Claim 1 or 2, **characterized in that** the determined running resistance (F_Fw1, F_Fw2) is subjected to a plausibility check in each case, and that only a plausible value of the running resistance (F_Fw1, F_Fw2) is stored and used for the determination of the offset value (x_Offset) of the inclination sensor (5).

4. Method according to Claim 3, **characterized in that** in the context of the plausibility check a check is made as to whether the determined running resistance (F_Fw1, F_Fw2) lies in an expected range determined by applicable boundary values (F_Fw_min, F_Fw_max) in each case.

5. Method according to Claim 3 or 4, **characterized in that** in the context of the plausibility check the gradient of the running resistance (d/dt F_Fw1, d/dt F_Fw2) is determined and checked as to whether the respective running resistance gradient (d/dt F_Fw1, d/dt F_Fw2) lies close to zero within an applicable tolerance threshold during an applicable observation period.

6. Method according to Claim 3 or 4, **characterized in that** in the context of the plausibility check a check is made as to whether the difference of the actual determined value of the running resistance (F_Fw1, F_Fw2) and the latest determined value of the running resistance (F_Fw1, F_Fw2) in the same direction of travel lies close to zero to within an applicable tolerance threshold in each case.

7. Method according to any one of the Claims 1 through 6, **characterized in that** the latest determined value of the running resistance (F_Fw1) in the first direction of travel is compared with the first determined value of the running resistance (F_Fw2) in the second direction of travel.

8. Method according to any one of the Claims 1 through 6, **characterized in that** the running resistance (F_Fw1, F_Fw2) used in each direction of travel is determined as the mean value of an applicable number of a plurality of successively determined values of running resistance (F_Fw1, F_Fw2).

9. Method according to Claim 7 or 8, **characterized in that** the values of running resistance (F_Fw1, F_Fw2) successively determined in each direction of travel are each smoothed by means of a suitable filter function.

10. Method according to any one of the Claims 1 through 9, **characterized in that** the permanently stored offset value (x_Offset) of the inclination sensor is determined as the mean value of an applicable number of a plurality of offset values (x_Offset) determined for successive changes in the direction of travel.

11. Method according to any one of the Claims 1 through 10, **characterized in that** the steering angle of the vehicle steering means and/or the transverse acceleration of the motor vehicle is/are detected and that the determination of the running resistance (F_Fw1, F_Fw2) as well as an actual offset value (x_Offset) of the inclination sensor (5) is interrupted for the duration {Δt_U} of detected travel round a bend.

12. Method according to any one of the Claims 1 through 11, **characterized in that** carriageway unevenness and/or the transverse tilt of the motor vehicle and/or an off-road gear selected in the gearbox are detected and that the determination of the running resistance (F_Fw1, F_Fw2) as well as an actual offset value (x_Offset) of the inclination sensor (5) is interrupted for the duration {Δt_U) of detected off-road travel.

13. Method according to any one of the Claims 1 through 12, **characterized in that** the selection state of the gearbox (3) is detected and that the determination of the running resistance (F_Fw1, F_Fw2) as well as an actual offset value (x_Offset) of the inclination sensor (5) is interrupted for the duration {Δt_U) of a detected gear change.

14. Method according to any one of the Claims 1 through 13, **characterized in that** the degree of opening of a clutch connecting the drive engine to the gearbox (3) is detected and that the determination of the running resistance (F_Fw1, F_Fw2) as well as an actual offset value (x_Offset) of the inclination sensor (5) is interrupted for the duration (Δt_U) of disengagement of an at least partly disengaged clutch.

15. Method according to any one of the Claims 1 through 14, **characterized in that** the state of actuation of the operating brake is detected and that the determination of the running resistance (F_Fw1, F_Fw2) as well as an actual offset value (x_Offset) of the inclination sensor (5) is interrupted for the duration (Δt_U) of a detected actuation of the operating brake.

16. Method according to any one of the Claims 1 through 15, **characterized in that** the actual speed of travel (v_F} is detected and that the determination of the running resistance (F_Fw1, F_Fw2) as well as an actual offset value (x_Offset) of the inclination sensor (5) is interrupted for the duration Δt_U of a speed of travel (v_F) greater than an applicable speed limit (v_Gr), i.e. (v_F > v_Gr).

17. Method according to any one of the Claims 1 through 16, **characterized in that** the actually engaged gear (G_F) is detected and that the determination of the running resistance (F_Fw1, F_Fw2) as well as an actual offset value (x_Offset) of the inclination sensor (5) is interrupted for the duration Δt_U of a gear (G_F) lying above an applicable threshold gear (G_Gr), i.e. (G_F > G_Gr).

18. Method according to any one of the Claims 1 through 17, **characterized in that** the operating state of the motor vehicle is detected and that the determination of the running resistance (F_Fw1, F_Fw2) as well as an actual offset value (x_Offset) of the inclination sensor (5) is interrupted for the duration (Δt_U) of a detected pause in operation.

19. Method according to any one of the Claims 11 through 18, **characterized in that** the determination of the running resistance (F_Fw1, F_Fw2) and an actual offset value (x_Offset) of the inclination sensor (5) is continued after the period of the interruption if the duration of the interruption (Δt_U) is below an applicable threshold period (Δt_Gr), i.e. (Δt_U < Δt_Gr), and is terminated if the duration of the interruption (Δt_U) reaches or exceeds the threshold duration (Δt_Gr), i.e. if (Δt_U ≥ Δt_Gr).

20. Method according to any one of the Claims 1 through 19, **characterized in that** the mass of the vehicle (m_Fzg) or the mass of the load {m_Ldg) is determined and that the determination of the running resistance (F_Fw1, F_Fw2) and an actual offset value (x_Offset) of the inclination sensor (5) is terminated if the determined change (Δm) of the mass of the vehicle (m_Fzg) or the mass of the load (m_Ldg) exceeds an applicable threshold mass difference (Δm-Gr>0), i.e. if (|Δm|>Δm_Gr).

## Revendications

1. Procédé d'étalonnage d'un capteur d'inclinaison disposé dans un véhicule automobile (1) pourvu d'une boîte de vitesses automatisée (3) afin de déterminer l'inclinaison de la chaussée (α_Fb) et la résistance à la côte (F_Steig) et relié techniquement sur le plan du signal à l'appareil de commande de boîte de vitesses (4) de la boîte de vitesses (3), **caractérisé en ce que** dans des conditions de fonctionnement définies, une valeur de compensation (x_Offset) actuelle est automatiquement calculée pour compenser le point nul du capteur d'inclinaison (5), la résistance à la conduite (F_Fw1) actuelle étant calculée de façon répétée indépendamment du capteur d'inclinaison et temporairement mémorisée après la mise en exploitation du véhicule automobile (1), pendant la conduite dans une première direction de conduite, et une valeur de signal brute (x_Ns0) actuelle du capteur d'inclinaison (5) étant détectée, jusqu'à ce qu'un changement de direction de conduite soit reconnu, que la dernière valeur de signal brute (x_Ns0) détectée du capteur d'inclinaison (5) est alors d'abord temporairement mémorisée, et qu'ensuite, pendant la conduite dans la deuxième direction de conduite opposée, la résistance à la conduite (F_Fw2) actuelle est calculée de façon répétée indépendamment du capteur d'inclinaison et mémorisée de façon temporaire, et que la résistance à la conduite (F_Fw1) calculée pour la première direction de conduite est comparée à la résistance de conduite (F_Fw2) calculée pour la deuxième direction de conduite opposée, et qu'en présence d'une surestimation comprise dans un seuil de tolérance (ΔF_Ts) prédéfini des deux résistances de conduite (F_Fw1, F_Fw2), la valeur de signal brute (x_Ns0) mémorisée du capteur d'inclinaison est mémorisée de façon durable comme valeur de compensation (x_Offset) par rapport à la compensation par rapport au point nul du capteur d'inclinaison (5) (x_Offset = x_Ns0).

2. Procédé selon la revendication 1, **caractérisé en ce que** la résistance à la conduite (F_Fw1, F_Fw2) est respectivement déterminée à partir de la force de traction ou de poussée (F_Rad) du moteur d'entraînement s'exerçant sur les roues motrices ainsi qu'à partir de la masse du véhicule (m_Fzg) et de la résistance à l'accélération F_B (F_B = m_Fzg * a_F) définie par l'accélération du véhicule (a_F) d'après l'équation F_Fw = F_Rad - F_B.

3. Procédé selon la revendication 1 ou 2, **caractérisé en ce que** la résistance à la conduite (F_Fw1, F_Fw2) calculée est respectivement soumise à un contrôle de plausibilité et que seule une valeur de résistance à la conduite (F_Fw1, F_Fw2) plausible est mémorisée et utilisée pour le calcul de la valeur de compensation (x_Offset) du capteur d'inclinaison (5).

4. Procédé selon la revendication 3, **caractérisé en ce qu'**on contrôle, dans le cadre du contrôle de plausibilité, si la résistance à la conduite (F_Fw1, F_Fw2) calculée se situe respectivement dans une plage attendue définie par les valeurs limites (F_Fw_min, F_Fw_max) applicables.

5. Procédé selon la revendication 3 ou 4, **caractérisé en ce qu'**on définit, dans le cadre du contrôle de plausibilité, le gradient de la résistance à la conduite (d/dt F_Fw1, d/dt F_Fw2) et qu'on contrôle si le gradient de résistance à la conduite (d/dt F_Fw1, d/dt F_Fw2) respectif est quasi nul à l'intérieur d'un seuil de tolérance applicable pendant une durée d'observation applicable.

6. Procédé selon la revendication 3 ou 4, **caractérisé en ce qu'**on contrôle, dans le cadre du contrôle de plausibilité, si la différence de la valeur de résistance à la conduite (F_Fw1, F_Fw2) actuellement calculée et de la valeur de résistance à la conduite (F_Fw1, F_Fw2) calculée en dernier dans la même direction de conduite est respectivement quasi nulle à l'intérieur d'un seuil de tolérance applicable.

7. Procédé selon l'une quelconque des revendications 1 à 6, **caractérisé en ce que** la valeur de résistance à la conduite (F_Fw1) calculée en dernier dans la première direction de conduite est comparée à la valeur de résistance à la conduite (F_Fw2) calculée en dernier dans la deuxième direction de conduite.

8. Procédé selon l'une quelconque des revendications 1 à 6, **caractérisé en ce que** la résistance à la conduite (F_Fw1, F_Fw2) utilisée dans chaque direction de conduite est respectivement définie comme la valeur moyenne d'un nombre applicable de plusieurs valeurs de résistance à la conduite (F_Fw1, F_Fw2) calculées les unes à la suite des autres.

9. Procédé selon la revendication 7 ou 8, **caractérisé en ce que** les valeurs de résistance à la conduite (F_Fw1, F_Fw2) successives calculées dans chaque direction de conduite sont respectivement lissées à l'aide d'une fonction de filtrage adaptée.

10. Procédé selon l'une quelconque des revendications 1 à 9, **caractérisé en ce que** la valeur de compensation (x_Offset) mémorisée de façon durable du capteur d'inclinaison est définie comme la valeur moyenne d'un nombre applicable de plusieurs valeurs de compensation (x_Offset) déterminées lors de changements de direction de conduite successifs.

11. Procédé selon l'une quelconque des revendications 1 à 10, **caractérisé en ce que** l'angle de direction de la direction du véhicule et/ou l'accélération transversale du véhicule automobile est détecté et que le calcul de la résistance à la conduite (F_Fw1, F_Fw2) ainsi que d'une valeur de compensation (x_Offset) actuelle du capteur d'inclinaison (5) est interrompu pendant la durée (Δt_U) de la conduite en virage reconnue.

12. Procédé selon l'une quelconque des revendications 1 à 11, **caractérisé en ce que** les irrégularités de la chaussée et/ou l'inclinaison transversale du véhicule automobile et/ou un rapport de vitesse tout-terrain passé dans la boîte de vitesses sont détectés et que le calcul de la résistance à la conduite (F_Fw1, F_Fw2) ainsi que d'une valeur de compensation (x_Offset) actuelle du capteur d'inclinaison (5) est interrompu pendant la durée (Δt_U) d'une conduite tout-terrain reconnue.

13. Procédé selon l'une quelconque des revendications 1 à 12, **caractérisé en ce que** l'état de changement de vitesse de la boîte de vitesses (3) est détecté et que le calcul de la résistance à la conduite (F_Fw1, F_Fw2) ainsi que d'une valeur de compensation (x_Offset) actuelle du capteur d'inclinaison (5) est interrompu pendant la durée (Δt_U) d'un changement de vitesse reconnu.

14. Procédé selon l'une quelconque des revendications 1 à 13, **caractérisé en ce que** le degré d'ouverture d'un embrayage de démarrage reliant le moteur d'entraînement à la boîte de vitesses (3) est détecté et que le calcul de la résistance à la conduite (F_Fw1, F_Fw2) ainsi que d'une valeur de compensation (x_Offset) actuelle du capteur d'inclinaison (5) est interrompu pendant la durée (Δt_U) d'un embrayage de démarrage au moins en partie ouvert.

15. Procédé selon l'une quelconque des revendications 1 à 14, **caractérisé en ce que** l'état d'actionnement du frein de service est détecté et que le calcul de la résistance à la conduite (F_Fw1, F_Fw2) ainsi que d'une valeur de compensation (x_Offset) actuelle du capteur d'inclinaison (5) est interrompu pendant la durée (Δt_U) d'un actionnement reconnu du frein de service.

16. Procédé selon l'une quelconque des revendications 1 à 15, **caractérisé en ce que** la vitesse de conduite (v_F) actuelle est détectée et que le calcul de la résistance à la conduite (F_Fw1, F_Fw2) ainsi que d'une valeur de compensation (x_Offset) actuelle du capteur d'inclinaison (5) est interrompu pendant la durée Δt_U pendant laquelle une vitesse de conduite (v_F) dépasse une vitesse limite (v_Gr) applicable (v_F > v_Gr).

17. Procédé selon l'une quelconque des revendications 1 à 16, **caractérisé en ce que** le rapport de vitesse (G_F) actuellement passé est détecté et que le calcul de la résistance à la conduite (F_Fw1, F_Fw2) ainsi que d'une valeur de compensation (x_Offset) actuelle du capteur d'inclinaison (5) est interrompu pendant la durée Δt_U d'un rapport de conduite (G_F) situé au-dessus d'un rapport limite (G_Gr) applicable (G_F > G_Gr).

18. Procédé selon l'une quelconque des revendications 1 à 17, **caractérisé en ce que** l'état de fonctionnement du véhicule automobile est détecté et que le calcul de la résistance à la conduite (F_Fw1, F_Fw2) ainsi que d'une valeur de compensation (x_Offset) actuelle du capteur d'inclinaison (5) est interrompu pendant la durée (Δt_U) d'une pause de fonctionnement reconnue.

19. Procédé selon l'une quelconque des revendications 11 à 18, **caractérisé en ce que** le calcul de la résistance à la conduite (F_Fw1, F_Fw2) et d'une valeur de compensation (x_Offset) actuelle du capteur d'inclinaison (5) reprend à expiration de l'interruption lorsque la durée d'interruption (Δt_U) est passée en dessous d'une durée limite (Δt_Gr) applicable (Δt_U < Δt_Gr) et est interrompu lorsque la durée d'interruption (Δt_U) a atteint ou dépassé la durée limite (Δt_Gr) (Δt_U ≥ Δt_Gr).

20. Procédé selon l'une quelconque des revendications 1 à 19, **caractérisé en ce que** la masse du véhicule (m_Fzg) ou la masse du chargement (m_Ldg) est détectée et que le calcul de la résistance à la conduite (F_Fw1, F_Fw2) et d'une valeur de compensation (x_Offset) actuelle du capteur d'inclinaison (5) est interrompu lorsque la variation (Δm) calculée de la masse du véhicule (m_Fzg) ou de la masse du chargement (m_Ldg) dépasse une valeur de différence de masse limite (Δm_Gr > 0) applicable (| Δm | > Δm_Gr).
